## Europäisches Patentamt
## European Patent Office
## Office européen des brevets

(19)

(11) Numéro de publication: **0 172 099**
**B1**

(12) # FASCICULE DE BREVET EUROPÉEN

(45) Date de publication du fascicule du brevet:
08.03.89

(51) Int. Cl.⁴: **F 16 F 15/12,** F 16 D 13/68

(21) Numéro de dépôt: 85401573.2

(22) Date de dépôt: 01.08.85

(54) **Dispositif amortisseur de torsion à palier de centrage en deux parties, notamment pour véhicule automobile.**

(30) Priorité: 03.08.84 FR 8412292

(43) Date de publication de la demande:
19.02.86 Bulletin 86/8

(45) Mention de la délivrance du brevet:
08.03.89 Bulletin 89/10

(84) Etats contractants désignés:
DE GB

(56) Documents cité:
FR-A-2 370 902
FR-A-2 496 786
US-A-2 965 464

(73) Titulaire: VALEO, 64 Avenue de la Grande Armée,
F-75017 Paris (FR)

(72) Inventeur: Carmillet, Roger, 74 Rue Championnet,
F-75018 Paris (FR)
Inventeur: Graton, Michel, 7 Bd Mortier, F-75020
Paris (FR)
Inventeur: Bacher, Michel, 17 Rue de Bretagne,
F-95330 Domont (FR)

(74) Mandataire: CABINET BONNET- THIRION, 95
Boulevard Beaumarchais, F-75003 Paris (FR)

EP 0 172 099 B1

LIBER, STOCKHOLM 1989

## Description

La présente invention concerne d'une manière générale les dispositifs amortisseurs de torsion du genre comportant au moins deux parties coaxiales montées rotatives l'une par rapport à l'autre.

Un tel dispositif amortisseur de torsion entre par exemple usuellement dans la constitution d'une friction d'embrayage, notamment pour véhicule automobile, l'une de ses parties rotatives comportant alors un disque de friction, destiné à être solidarisé en rotation avec un premier arbre, en pratique un arbre menant, l'arbre de sortie du moteur dans le cas d'un tel véhicule automobile, tandis qu'une autre comporte un moyeu par lequel elle est adaptée à être solidarisée en rotation avec un deuxième arbre, en pratique un arbre mené, l'arbre d'entrée d'une boîte de vitesses dans le cas concerné d'un tel véhicule automobile.

Dans une forme particulière, relativement simple, de réalisation, voir par example le document FR-A-2 436 786, celle des parties rotatives d'un tel dispositif amortisseur de torsion qui comporte un moyeu comporte également, autour de celui-ci, un voile de moyeu, qui, établi transversalement par rapport audit moyeu, est solidaire en rotation de celui-ci, tandis que l'autre desdites parties rotatives, celle qui porte le disque de friction, comporte deux rondelles, communément dites rondelles de guidage, qui, elles aussi établies transversalement par rapport au moyeu, autour de celui-ci, et à distance l'une de l'autre, sont axialement chacune respectivement disposées de part et d'autre du voile de moyeu, et sont solidaires en rotation l'une de l'autre.

Dans des formes, plus élaborées, de réalisation, le voile de moyeu, désolidarisé du moyeu, forme lui aussi une partie montée rotative par rapport audit moyeu, et/ou, outre les rondelles de guidage, interviennent transversalement par rapport à celui-ci, d'autres flasques ou voiles qui, comme les rondelles de guidage, s'étendent annulairement autour de ce moyeu.

Dans tous les cas, entrent également en jeu, d'une part, pour la filtration des vibrations susceptibles de prendre naissance tout au long de la chaîne cinématique, qui va du moteur aux arbres de roue dans le cas d'un véhicule automobile, sur laquelle est inséré un tel dispositif amortisseur de torsion, des moyens élastiques à action circonférentielle, qui, interposés circonférentiellement entre les parties rotatives constitutives de ce dispositif amortisseur de torsion, sont aptes à agir circonférentiellement entre elles pour une plage au moins de leur débattement angulaire, et, d'autre part, pour l'amortissement de ces vibrations, des moyens de frottement.

Ces moyens élastiques à action circonférentielle, et, pour l'essentiel, ces moyens de frottement sont hors de question ici.

Seul est en question le palier qu'il est par ailleurs usuel d'interposer radialement entre deux des parties rotatives constitutives d'un dispositif amortisseur de torsion du genre concerné.

Ce palier, qui est le plus souvent réalisé en matière synthétique, et qui, à ce jour, constitue usuellement par lui-même une pièce monobloc, a essentiellement pour fonction d'assurer un centrage convenable, l'une par rapport à l'autre, des parties rotatives entre lesquelles il est inséré.

Parfois, au moins, il a, également, mais en réalité accessoirement, pour fonction, de participer au moins à la constitution des moyens de frottement mis en oeuvre pour l'amortissement recherché.

La présente invention a d'une manière générale pour objet une disposition permettant à ce palier d'assumer avantageusement une troisième fonction, au bénéfice de l'ensemble.

De manière plus précise, elle a pour objet un dispositif amortisseur de torsion, notamment pour véhicule automobile, du genre comportant au moins deux parties coaxiales montées rotatives l'une par rapport à l'autre, avec, radialement interposé entre celles-ci, un palier, ce dispositif amortisseur de torsion étant d'une manière générale caractérisé en ce que ledit palier est formé de deux parties distinctes, qui sont disposées chacune respectivement de part et d'autre d'un plan diamétral de l'ensemble, et qui, calées chacune axialement sur l'une desdites parties rotatives, fournissent un appui axial à l'autre de celles-ci.

Lorsque, en pratique, comme cela est le cas le plus général, l'une des parties rotatives comporte un moyeu tandis que l'autre comporte deux rondelles, qui, établies à distance l'une de l'autre, transversalement par rapport au moyeu, autour dudit moyeu, sont solidaires en rotation l'une de l'autre, les deux parties constitutives du palier suivant l'invention sont calées axialement sur le moyeu, et, établies axialement entre les deux rondelles entourant celui-ci, elles assurent par elles-mêmes le maintien axial desdites rondelles par rapport audit moyeu.

Autrement dit, entre ses fonctions usuelles de centrage, et, éventuellement, de frottement, le palier suivant l'invention assure par lui-même, ou est au moins susceptible d'assurer par lui-même, le maintien axial l'une par rapport à l'autre des deux parties rotatives constitutives d'un dispositif amortisseur de torsion du genre concerné.

Dans certains cas, au moins, il apporte ainsi une solution simple, et économique, au problème du maintien axial l'une par rapport à l'autre de ces parties rotatives.

C'est le cas, notamment, dans les formes de réalisation relativement complexes, à rondelle(s), voile(s), contrevoile(s) ou flasque(s) multiple(s), d'un tel dispositif amortisseur de torsion.

Mais il est également avantageusement susceptible d'apporter aussi une simplification des fabrications dans les formes de réalisation plus simples.

Par exemple, s'agissant d'un dispositif amortisseur de torsion comportant, outre deux rondelles de guidage, un voile de moyeu unique calé sur le moyeu, il est usuel de constituer ce voile de moyeu à l'aide d'une pièce annulaire qui, distincte dudit moyeu, et présentant à sa périphérie interne une denture, est rapportée sur ce moyeu par engagement à force sur celui-ci.

Bien qu'une telle disposition ait donné et puisse encore donner satisfaction, elle présente l'inconvénient de nécessiter, pour sa mise en oeuvre, le développement d'efforts importants.

Avec un palier en deux parties suivant l'invention, le moyeu peut simplement présenter par avance sur sa périphérie une denture complémentaire de celle du voile de moyeu, et la mise en place de celui-ci se réduit alors à un simple engagement axial, sans développement d'un quelconque effort particulier, un palier en deux parties suivant l'invention assurant ensuite le maintien axial nécessaire dudit voile de moyeu par rapport audit moyeu.

Les caractéristiques et avantages de l'invention ressortiront d'ailleurs de la description qui va suivre, à titre d'exemple, en référence aux dessins schématiques annexés sur lesquels:

la figure 1 est une vue partielle en élévation d'un dispositif amortisseur de torsion mettant en oeuvre un palier en deux parties suivant l'invention, suivant la flèche I de la figure 2;

la figure 2 en est une vue en coupe axiale, suivant la ligne brisée II-II de la figure 1;

la figure 3 reprend, à échelle supérieure, le détail de la figure 2 repéré par un encart III sur celle-ci;

la figure 4 reprend, à l'échelle de la figure 3, et avec des arrachements locaux, le détail de la figure 1 repéré par un encart IV sur celle-ci;

la figure 5 est une vue en coupe axiale du moyeu que comporte le dispositif amortisseur de torsion suivant l'invention, représenté isolément, suivant la ligne brisée V-V de la figure 6;

la figure 6 est une vue en élévation de ce moyeu, suivant la flèche VI de la figure 5;

la figure 7 est, à échelle inférieure, une vue d'une des parties constitutives du palier mis en oeuvre dans le dispositif amortisseur de torsion suivant l'invention, représenté isolément;

la figure 8 est, à l'échelle de la figure 7, une vue en élévation de l'autre desdites parties constitutives de ce palier;

la figure 9 est une vue reprenant, à échelle supérieure, celle de la figure 8;

la figure 10 est une vue partielle en coupe axiale analogue à celle de la figure 3 et se rapporte à un autre dispositif amortisseur de torsion à palier en deux parties suivant l'invention;

la figure 11 est une vue analogue à celle de la figure 10 et concerne une variante de réalisation.

Ces figures illustrent, à titre d'exemple, l'application de l'invention à une friction d'embrayage, notamment pour véhicule automobile.

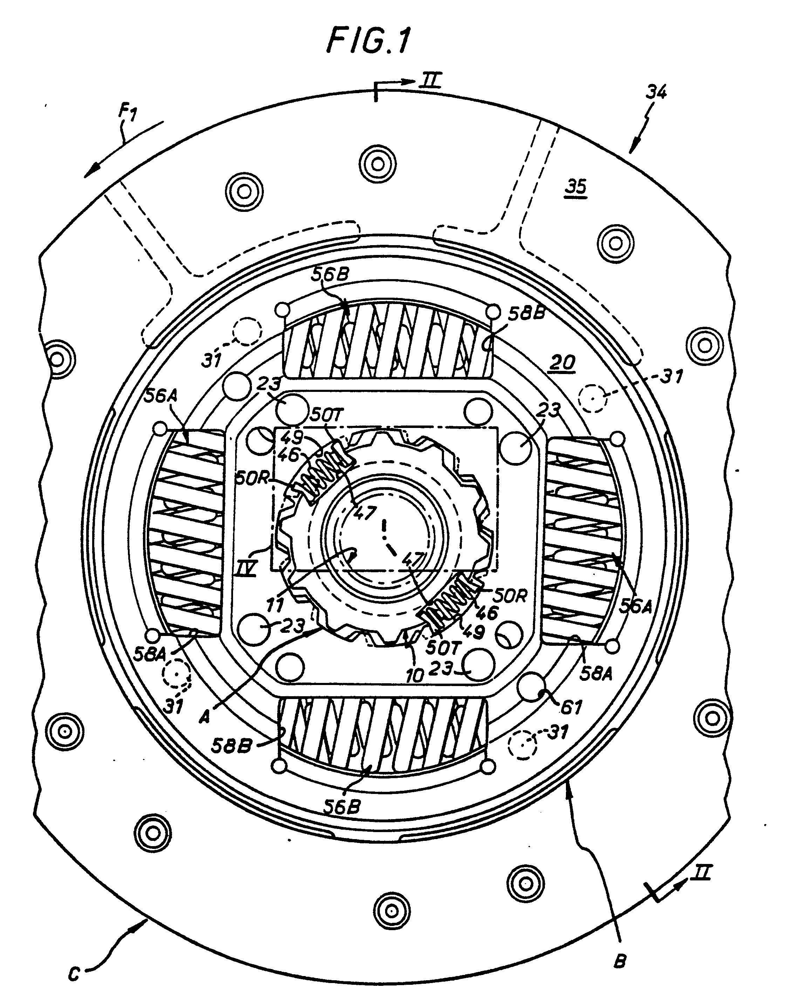

Les figures 1 à 9 concernent, plus particulièrement, le cas où le dispositif amortisseur de torsion que constitue une telle friction d'embrayage comporte trois parties coaxiales A, B, C deux à deux montées rotatives l'une par rapport à l'autre dans les limites d'un débattement angulaire déterminé et à l'encontre de moyens élastiques, communément dits moyens élastiques à action circonférentielle, aptes à agir circonférentiellement entre elles pour une plage au moins d'un tel débattement angulaire.

Ce dispositif amortisseur de torsion ne sera pas décrit dans tous ses détails ici.

Seuls en seront plus spécifiquement décrits les constituants nécessaires à la compréhension de l'invention.

La partie coaxiale A, ou première partie, est constituée par un simple moyeu 10 destiné à être calé en rotation sur un arbre non représenté, en pratique l'arbre d'entrée de la boîte de vitesses du véhicule concerné, formant arbre mené.

Par exemple, et tel que représenté, l'alésage interne 11 de ce moyeu 10 est, pour ce faire, cannelé.

La partie coaxiale B, ou deuxième partie, comporte un flasque 12, communément dit voile de moyeu, qui forme transversalement une pièce annulaire autour du moyeu 10, avec, entre lui et ledit moyeu 10, des moyens d'engrènement à jeu 13.

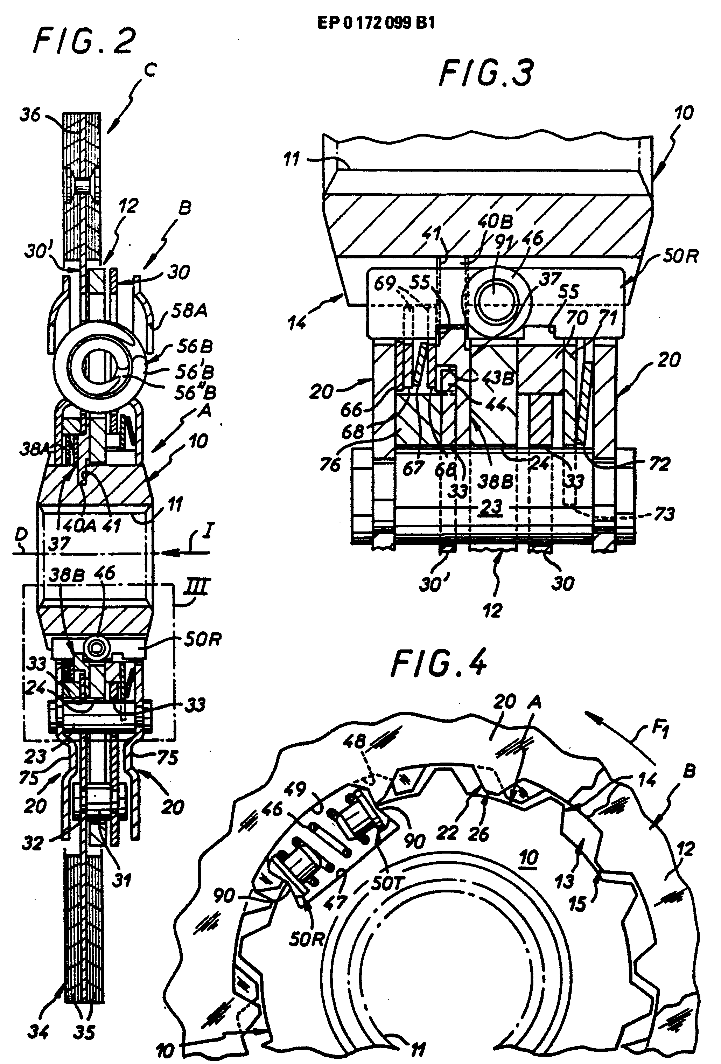

Ces moyens d'engrènement à jeu 13 comportent deux dentures 14, 15, l'une, 14, sur le moyeu 10, et plus précisément sur la périphérie externe de celui-ci, et l'autre, 15, sur ledit voile de moyeu 12, et, plus précisément, sur la tranche de la périphérie interne de celui-ci, figure 4.

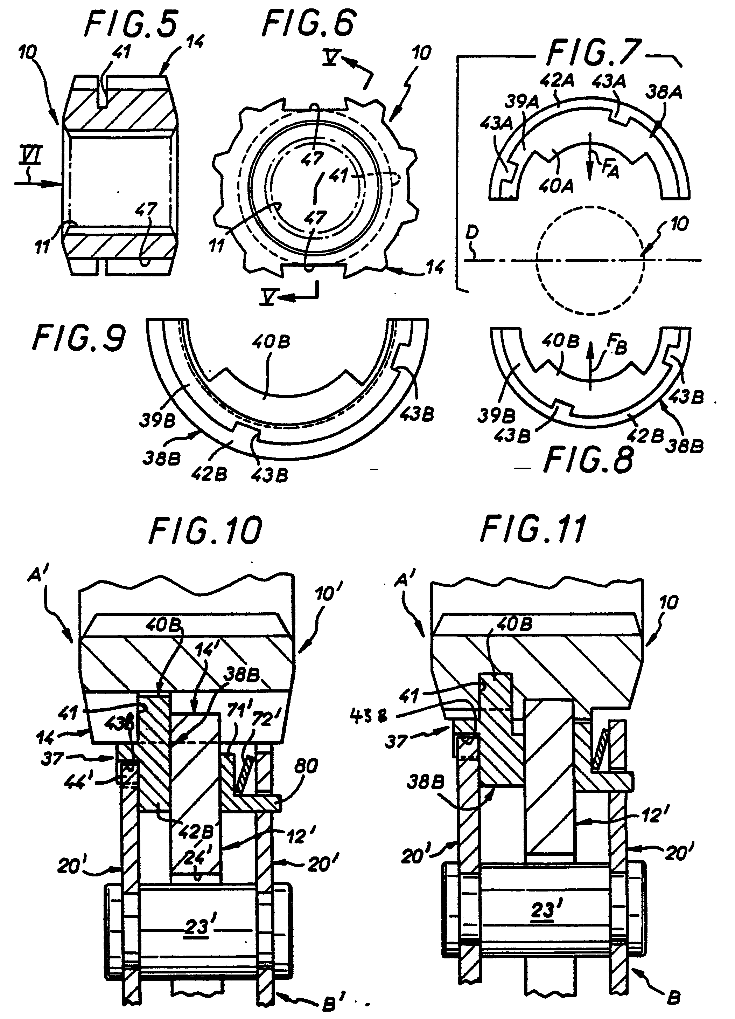

Dans la forme de réalisation représentée, et pour des raisons qui apparaîtront ci-après, la denture 14 du moyeu 10 s'étend axialement sur toute la longueur de celui-ci, figure 5.

De même, la denture 15 du voile de moyeu 12 s'étend axialement sur toute la longueur de sa tranche.

La partie coaxiale B comporte en outre au moins un autre flasque 20, dit ci-après par simple commodité voile auxiliaire, qui, comme le voile de moyeu 12, auquel il est associé, et parallèlement à celui-ci, forme transversalement une pièce annulaire autour du moyeu 10, avec, entre lui et celui-ci, des moyens d'engrènement à jeu 22.

Dans la forme de réalisation représentée, il y a ainsi deux voiles auxiliaires 20 qui, établis axialement à distance l'un de l'autre, parallèlement l'un à l'autre, chacun respectivement de part et d'autre du voile de moyeu 12, sont reliés l'un à l'autre par des entretoises axiales 23 traversant le dit voile de moyeu 12 à la faveur d'évidements 24 ménagés à cet effet dans celui-ci.

En pratique, quatre entretoises 23 sont ainsi prévues, sensiblement à 90° deux à deux, et donc un nombre égal d'évidements 24 pour le voile de moyeu 12.

Chacune de ces entretoises axiales 23 est sertie, à ses extrémités, sur les voiles auxiliaires 20 qu'elle relie.

Les moyens d'engrènement à jeu 22 entre le moyeu 10 et les voiles auxiliaires 20 sont axialement en correspondance d'un de ces voiles auxiliaires 20 à l'autre.

Pour chacun de ces voiles auxiliaires 20, ils comportent deux dentures conjuguées, l'une sur le moyeu 10, l'autre sur un tel voile auxiliaire 20.

En pratique, la denture 14 du moyeu 10 s'étendant axialement sur toute la longueur de celle-ci, elle est commune au voile de moyeu 12 et aux voiles auxiliaires 20.

Autrement dit, le moyeu 10 comporte une même et seule denture 14 pour le voile de moyeu 12 et pour les voiles auxiliaires 20.

Comme pour le voile de moyeu 12, la denture conjuguée 26 des voiles auxiliaires 20 est ménagée à la périphérie interne de ces voiles auxiliaires 20, par exemple par découpe, en s'étendant en pratique sur toute la longueur de la tranche de celle-ci.

La partie coaxiale C, ou troisième partie, comporte, elle aussi, au moins un flasque 30, qui, comme le voile de moyeu 12, et parallèlement à celui-ci, forme transversalement une pièce annulaire autour du moyeu 10, mais qui, à la différence de ce voile de moyeu 12, et donc des voiles auxiliaires 20, est sans relation avec ce moyeu 10, c'est-à-dire sans moyens l'engrènement à jeu entre lui et ce dernier.

Dans la forme de réalisation représentée, la partie coaxiale C comporte en fait deux flasques 30, 30', qui, établis axialement à distance l'un de l'autre, parallèlement l'un à l'autre, chacun respectivement de part et d'autre du voile de moyeu 12, sont reliés l'un a l'autre par des entretoises axiales 31 traversant ledit voile de moyeu 12 à la faveur d'évidements 32 ménagés à cet effet dans celui-ci.

En pratique, il y a ainsi quatre entretoises axiales 31, disposées sensiblement à 90° deux à deux, et donc un nombre égal d'évidements 32 pour le voile de moyeu 12.

Dans la forme de réalisation représentée, ces flasques 30, 30' sont disposés au voisinage immédiat du voile de moyeu 12, les voiles auxiliaires 20 étant eux-mêmes chacun respectivement disposés de part et d'autre de l'ensemble constitué par ce voile de moyeu 12 et ces flasques 30, 30'.

Autrement dit, dans cette forme de réalisation, les voiles auxiliaires 20 forment chacun respectivement les flasques axialement les plus extérieurs pour le dispositif amortisseur de torsion concerné.

Il en résulte que, comme le voile de moyeu 12, les entretoises axiales 23 qui les relient l'un à l'autre traversent les flasques 30, 30', à la faveur d'évidements 33 ménagés à cet effet dans ceux-ci.

La partie coaxiale C comporte, en outre, un disque de friction 34.

Dans la forme de réalisation représentée, le voile de celui-ci est directement formé par le flasque 30' précédemment décrit, celui-ci constituant en effet par lui-même, audelà de la périphérie du voile de moyeu 12, des voiles auxiliaires 20, et du flasque 30 auquel il est associé, des pales 36, avec, rapportées sur ces pales 36, et de part et d'autre de celles-ci, deux garnitures de frottement 35.

Par serrage de ces garnitures de frottement 35 entre deux plateaux, à savoir un plateau de pression et un plateau de réaction, non représentés, la partie coaxiale C est ainsi apte à être solidarisée en rotation avec un arbre.

Il s'agit en pratique d'un arbre menant.

Dans le cas, concerné, d'une friction d'embrayage pour véhicule automobile, il s'agit, plus précisément, de l'arbre de sortie du moteur d'un tel véhicule.

Pour le centrage de la partie coaxiale C par rapport à la partie coaxiale A, il est radialement interposé, entre l'un des flasques 30, 30' de cette partie coaxiale C et le moyeu 10 constituant cette partie coaxiale A, un palier 37.

Dans la forme de réalisation représentée, ce palier 37 est ainsi interposé entre la périphérie interne du flasque 30' et le moyeu 10.

Suivant l'invention, ce palier 37 est formé de deux parties distinctes 38A, 38B, qui sont disposées chacune respectivement de part et d'autre d'un même plan diamétral D de l'ensemble, et qui, calées chacune axialement sur l'une des parties coaxiales A, C en cause, fournissent un appui axial à l'autre de celles-ci.

Le plan diamétral D concerné est repéré par sa trace, en traits interrompus, sur les figures 2 et 7.

En pratique, dans la forme de réalisation représentée, les deux parties 38A, 38B constitutives du palier 37 sont calées axialement sur le moyeu 10 formant la partie A, et elles sont établies axialement entre les deux flasques 30, 30' de la partie coaxiale C entourant ledit moyeu 10.

Les deux parties 38A, 38B constitutives du palier 37 suivant l'invention sont chacune respectivement représentées isolément sur les figures 7, 8.

Dans la forme de réalisation représentée, elles s'étendent chacune suivant un angle au centre sensiblement égal à 180°, et elles sont donc affrontées l'une à l'autre suivant le plan diamétral D de part et d'autre duquel elles s'étendent.

En outre, dans la forme de réalisation représentée, les deux parties 38A, 38B constitutives du palier 37 suivant l'invention comportent chacune une demi-couronne 39A, 39B, qui, à sa périphérie interne, et d'un premier côté axial, présente, circonférentiellement, sur une portion au moins de sa longueur, et, en pratique, dans la forme de réalisation représentée, sur une portion seulement de celle-ci, une languette 40A, 40B, qui s'étend radialement, dans un premier sens, et, en pratique, en direction de l'axe de l'ensemble, et par laquelle elles sont chacune conjointement engagées dans une saignée annulaire 41 du moyeu 10 formée transversalement à cet effet dans celui-ci à compter de sa périphérie externe.

En pratique, pour le centrage recherché de la partie coaxiale C par rapport à la partie coaxiale A, c'est-à-dire des flasques 30, 30' par rapport au moyeu 10, cette languette 40A, 40B est admise à coopérer, par sa périphérie interne, avec le fond de la saignée 41 du moyeu 10 dans laquelle elle est engagée.

A sa périphérie externe, la couronne 39A, 39B de chacune des parties 38A, 38B du palier 37 suivant l'invention présente, circonférentiellement, sur une portion au moins de sa longueur, et, en pratique, dans la forme de réalisation représentée, sur toute cette longueur, et du côté axial opposé au précédent, une collerette 42A, 42B, qui s'étend également radialement, comme la languette 40A, 40B associée, mais dans le sens opposé à celui de celle-ci, et par laquelle lesdites parties 38A, 38B fournissent, comme recherché, un appui axial aux flasques 30, 30' de la partie coaxiale C, en étant insérées, comme indiqué ci-dessus, entre ces flasques 30, 30'.

En pratique, la collerette 42A, 42B de chacune des parties constitutives du palier 37 suivant l'invention est insérée axialement entre le flasque 30' et le voile de moyeu 12, en étant au contact dudit voile de moyeu 12.

Dans la forme de réalisation représentée, cette collerette 42A, 42B a une épaisseur moindre que celle de la languette 40A, 40B associée, qui a elle-même une épaisseur moindre que celle de la partie courante de la couronne 39A, 39B correspondante, et elle est axialement décalée par rapport à ladite languette 40A, 40B.

Autrement dit, dans cette forme de réalisation, la collerette 42A, 42B de chacune des parties 38A, 38B constitutives du palier 37 suivant l'invention s'étend dans un plan transversal différent de celui dans lequel s'étend sa languette 40A, 40B.

Enfin, de place en place, à sa périphérie externe, la couronne 39A, 39B dont est issue une telle collerette 42A, 42B présente des échancrures 43A, 43B dans lesquelles pénètrent radialement, pour leur solidarisation en rotation a la partie coaxiale C, des dents 44 prévues radialement en saillie à cet effet, en direction de l'axe de l'ensemble, à la périphérie interne du flasque 30' appartenant à ladite partie coaxiale C, figure 3.

Dans la forme de réalisation représentée, la portion d'une telle couronne 39A, 39B présentant ces échancrures 43A, 43B est axialement à distance du plan transversal moyen de l'ensemble passant par la languette 40A, 40B correspondante.

Par ailleurs, dans cette forme de réalisation, la saignée 41 du moyeu 10 est commune aux deux parties 38A, 38B constitutives du palier 37 suivant l'invention.

Les moyens élastiques à action circonférentielle interposés entre les parties coaxiales A, B, C sont hors de question, ici, et, bien connus par eux-mêmes, ils ne seront donc pas décrits en détail.

Dans la forme de réalisation représentée, ceux interposés entre la partie coxiale A et la partie coaxiale B comportent, pour la filtration des bruits dits bruits de point mort ou de ralenti, deux ressorts de relativement faible raideur 46, du type ressort à boudin, qui, disposés sensiblement tangentiellement par rapport à une circonférence de l'ensemble, en positions sensiblement diamétralement opposées l'un par rapport à l'autre, sont chacun logés pour partie dans une échancrure 47 interrompant localement la denture 14 du moyeu 10 et pour partie dans des échancrures 48, 49 interrompant localement la denture 15 du voile de moyeu 12 et celle 22 des voiles auxiliaires 20, avec, interposition, à leurs extrémités, de barrettes 50T, 50R, entre eux et les épaulements formant les bords d'extrémité circonférentielle correspondants des échancrures 47, 48, 49 concernées.

Dans la forme de réalisation représentée, et ainsi qu'il est mieux visible sur la figure 6, le fond de la saignée 41 du moyeu 10 s'étend suivant un cercle tangent au fond de ses échancrures 47.

Pour sa retenue axiale, chacune des barrettes 50T, 50R présente une échancrure 55 par laquelle elle est engagée sur le palier 37, ou, plus précisément, sur la partie 38A, 38B correspondante de celui-ci.

Pour sa coopération avec les épaulements formant les bords d'extrémité circonférentielle des échancrures 47, 48, 49 précisées ci-dessus, elle présente à son dos une dépression en forme de dièdre 90, formant dièdre d'emboîtement, tandis que, pour centrage du ressort 46 qui prend appui sur elle, elle comporte en saillie un ergot 91, comme décrit dans le brevet français N° 2 270 491 du 21 Février 1977.

En pratique le palier 37 étant établi axialement à distance du plan transversal moyen de l'ensemble qui passe globalement par l'axe des ressorts 46, chacune des barrettes 50T, 50R présente deux échancrures 55 identiques, disposées chacune respectivement de part et d'autre de ce plan transversal moyen, symétriquement de part et d'autre de l'ergot 91 qu'elle comporte, pour en permettre une mise en place indifférenciée dans un sens axial ou dans l'autre dans ledit ensemble, seule l'une desdites échancrures 55 étant ainsi utilisée après une telle mise en place.

Ainsi qu'on l'aura compris, c'est à la faveur des espaces libres que laissent circonférentiellement entre elles les languettes 40A, 40B des deux parties 38A, 38B constitutives du palier 37 suivant l'invention que sont logés les ensembles formés par les barrettes 50T, 50R et les ressorts 46, la longueur circonférentielle desdites languettes 40A, 40B ayant très précisément été réduite à cet effet dans cette forme de réalisation.

De préférence, il existe même circonférentiellement un léger jeu entre chacune des barrettes 50T, 50R et l'extrémité circonférentielle correspondante de la languette 40A, 40B concernée.

Quant aux moyens élastiques à action circonférentielle interposés entre les parties coaxiales B, C, ils comportent, en alternance, deux organes élastiques 56A et deux organes élastiques 56B, qui, de raideur plus forte que celle des ressorts 46 précédents, sont chacun constitués de deux ressorts à boudin coaxiaux 56'A, 56''A et 56'B, 56''B, et qui sont chacun au moins pour partie logés, d'une part, dans un évidement du voile de moyeu 12 et dans des évidements des voiles auxiliaires 20, formés en pratique par des fenêtres dudit voile de moyeu 12 et desdits voiles auxiliaires 20, et, d'autre part, dans des évidements des flasques 30, 30', également formés en pratique par des fenêtres de ceux-ci.

Ainsi qu'on le notera, les voiles auxiliaires 20 forment les flasques axialement les plus extérieurs du dispositif amortisseur de torsion concerné et présentant des évidements 58A, 58B dans lesquels sont chacun individuellement logés pour partie les organes élastiques 56A, 56B, ils constituent, pour ceux-ci, ce qu'il est usuellement convenu d'appeler des "rondelles de guidage", l'un eu moins des bords d'extrémité radiale de leurs dits évidements 58A, 58B, et, par exemple, celui radialement le plus externe, étant avantageusement conformé en auvent à cet effet, tel que représenté.

En outre, pour un bon appui des organes élastiques 56A, 56B, ces voiles auxiliaires présentent chacun, annulairement, dans la zone de leurs évidements, et dirigé vers l'intérieur, un embouti 75, figure 2.

Entre les diverses parties coaxiales A, B, C constitutives du dispositif amortisseur de torsion concerné interviennent, enfin, de manière connue en soi, des moyens de frottement.

Dans la forme de réalisation représentée, ceux-ci comportent, outre le palier 37 déjà précédemment décrit, et, plus précisément, les collerettes 42A, 42B des deux parties 38A, 38B constitutives de celui-ci, une rondelle de frottement 66, qui, disposée au contact de la face interne de celui des voiles auxiliaires 20 qui est disposé du même côté du voile de moyeu 12 que le palier 37, est soumise à des moyens élastiques à action axiale la sollicitant en permanence en appui contre ce voile auxiliaire 20, figure 3.

En pratique, ces moyens élastiques à action axiale sont constitués par une rondelle élastique 67, du type rondelle Belleville, interposée entre deux rondelles de répartition 68, qui, disposées, l'une au contact de la rondelle de frottement 66, l'autre au contact du palier 37, sont l'une et l'autre calées en rotation, par des dents 69, sur le moyeu 10, lesdites dents 69 étant en prise avec la denture 14 de ce moyeu 10.

Dans la forme de réalisation représentée, les moyens de frottement intervenant entre les parties coaxiales A, B, C constitutives du dispositif amortisseur de torsion suivant l'invention comportent, encore, une rondelle de frottement 70, qui est radialement disposée à la périphérie interne du flasque 30, entre celle-ci et le moyeu 10.

Cette rondelle de frottement 70 est axialement au contact, d'une part, du voile de moyeu 12, et, d'autre part, d'une rondelle de répartition 71, qui est elle-même soumise à des moyens élastiques à action axiale, en pratique une rondelle Belleville 72, prenant appui sur le voile auxiliaire 20 voisin, et qui, par des doigts 73 faisant saillie radialement à sa périphérie externe, est en prise avec l'une au moins des entretoises axiales 23, en étant donc calée en rotation sur les voiles auxiliaires 20 par celle-ci.

Les moyens de frottement entre les parties coaxiales A, B, C constitutives du dispositif amortisseur de torsion suivant l'invention comportent enfin, dans la forme de réalisation représentée, une rondelle de frottement 76, qui, disposée axialement entre le flasque 30' et le voile auxiliaire 20 proche de celui-ci, s'étend radialement entre les entretoises axiales 23 et les rondelles 66, 67, 68 précédentes.

Par ailleurs, bien que, au moins dans une certaine mesure, le centrage des voiles auxiliaires 20 par rapport au moyeu 10 puisse être assuré par leur denture 26, ce centrage est de préférence assuré par les entretoises axiales 23, par coopération de celles-ci avec les évidements 33 des flasques 30, 30' qu'elles traversent, ces flasques 30, 30' se trouvant eux-mêmes centrés sur le moyeu 10 par le palier 37 suivant l'invention, comme indiqué ci-dessus.

De même, le centrage du voile de moyeu 12 peut être assuré par ces entretoises axiales 23; il peut également être assuré par les entretoises axiales 31.

Le fonctionnement, en service, du dispositif amortisseur de torsion ainsi constitué est hors de question ici.

Il ne sera donc pas décrit.

Seul est concerné ici le montage de ce dispositif amortisseur de torsion.

S'agissant du palier 37, et tel qu'illustré par les figures 7, 8, ce montage se fait par présentation radiale, vis-a-vis du moyeu 10, des deux parties 38A, 38B qui le constituent, suivant des directions radialement opposées l'une par rapport à l'autre schématisées par les flèches FA et FB sur ces figures 7, 8, et après mise en place préalable des barrettes 50T, 50R et des ressorts 46 s'étendant circonférentiellement entre celles-ci.

Dès lors en prise par leur languette 40A, 40B avec la saignée 41 du moyeu 10, les parties 38A, 38B constitutives du palier 37 suivant l'invention se trouvent axialement calées sur ce moyeu 10.

Il en est de même pour les barrettes 50T, 50R, celles-ci étant alors en prise par leur échancrure 55 avec la couronne 39A, 39B de la partie 38A, 38B correspondante du palier 37.

Il suffit, ensuite, d'assurer, d'une part, la mise en place, de manière conventionnelle, des organes élastiques 56A, 56B, et, d'autre part, de manière également conventionnelle, mais de part et d'autre du palier 37 préalablement mis en place, l'empilage axial des divers flasques ou rondelles à mettre en oeuvre.

Bien entendu, les flasques 30, 30' de la partie coaxiale C sont solidarisés l'un à l'autre, par les entretoises axiales 31, avant la mise en place des rondelles de guidage 20, elles-mêmes solidarisées l'une à l'autre par les entretoises axiales 23.

Ainsi qu'on le notera, d'ailleurs, le moyeu 10, le voile de moyeu 12, les ressorts 46, et, les barrettes 50T, 50R correspondantes, et les flasques 30, 30', et donc le disque de friction formé par le flasque 30', peuvent avantageusement constituer, conjointement, après mise en place des entretoises axiales 31, un sous-ensemble unitaire, apte à être pré-assemblé individuellement et à être manipulé en tant que tel avant l'assemblage des autres constituants du, dispositif amortisseur de torsion concerné.

Quoi qu'il en soit, calées axialement sur le moyeu 10 et fournissant un appui axial aux flasques 30, 30' de la partie coaxiale C, puisque insérées axialement entre celle-ci, les deux parties 38A, 38B constitutives du palier 37 suivant l'invention assurent avantageusement par elles-mêmes le maintien axial de ces flasques 30, 30' et donc de la partie coaxiale C, par rapport audit moyeu 10.

Il en est de même pour le voile de moyeu 12 de la partie coaxiale B, puisque celui-ci est encadré par les flasques 30, 30' de la partie coaxiale C.

Et il en est donc également de même pour les rondelles de guidage 20 de la partie coaxiale B, celles-ci encadrant les flasques 30 de la partie coaxiale C.

Ainsi, c'est l'ensemble des constituants du dispositif amortisseur de torsion concerné que le palier 37 suivant l'invention cale axialement sur le moyeu 10 de celui-ci.

La figure 10 illustre l'application de l'invention au cas, plus simple, où le dispositif amortisseur de torsion concerné ne comporte que deux parties coaxiales A', B'.

Outre un moyeu 10', la partie coaxiale A' comporte, dans ce cas, un voile de moyeu 12', celui-ci étant calé en rotation sur le moyeu 10'.

Conjointement, la partie coaxiale B' comporte, dans ce cas, deux rondelles de guidage 20' qui, disposées chacune respectivement de part et d'autre du voile de moyeu 12', sont solidarisées l'une à l'autre par des entretoises axiales 23' traversant avec jeu des évidements 24' prévus à cet effet dans le voile de moyeu 12'.

Il s'agit, bien entendu, de rondelles de guidage 20, 20' montées libres par rapport au moyeu 10', autour de celui-ci.

L'une d'elles porte un disque de friction, non visible sur la figure, à sa périphérie.

C'est entre l'une de ces rondelles de guidage 20, 20' et le moyeu 10' qu'est interposé radialement un palier 37 formé, suivant l'invention, de deux parties distinctes, dont une seule, la partie 38B, est visible sur la figure 10.

Par sa languette 40B elle est en prise avec une saignée 41 du moyeu 10'; par sa collerette 42B elle est insérée axialement entre les rondelles de guidage 20' et, plus précisément, entre l'une de celles-ci et le voile de moyeu 12'.

Dans la forme de réalisation représentée, la collerette 42B s'étend sensiblement dans le même plan transversal que la languette 40B.

Quoi qu'il en soit, elle peut, si désiré, s'étendre circonférentiellement sur toute la longueur de la couronne 39B qui la porte, et, donc, de la partie 38B concernée.

Bien entendu, les dispositions décrites ci-dessus pour la partie 38B du palier 37 se retrouvent identiquement sur l'autre partie de celui-ci.

Comme précédemment, ce palier 37 est en outre calé en rotation sur la partie coaxiale B', celle des rondelles de guidage 20' à laquelle il est accolé présentant, à sa périphérie interne des dents 44' par lesquelles elle est en prise avec des encoches 43B ménagées à cet effet sur l'une et l'autre des parties constitutives de ce palier 37.

Comme précédemment, également, le palier 37 forme ainsi par lui-même une partie des moyens de frottement intervenant entre les parties coaxiales A', B'.

Dans la forme de réalisation représentée, ces moyens de frottement se trouvent complétés par une rondelle de frottement 71' qui, disposée de l'autre côté du voile de moyeu 12', et calée par des pattes 80 sur la rondelle de guidage 20' correspondante, est soumise à une rondelle Belleville 72' prenant appui sur cette dernière.

Comme précédemment, enfin, entre les parties coaxiales A', B' interviennent, circonférentiellement, et de manière connue en soi, des moyens élastiques à action circonférentielle non visibles sur la figure.

Ainsi qu'on le notera, et comme précédemment, calé axialement sur le moyeu 10' et inséré axialement entre les rondelles de guidage 20', le palier 37 assure avantageusement par lui-même le maintien axial de ces rondelles de guidage 20' par rapport audit moyeu 10'.

Il en est de même pour le voile de moyeu 12'.

Par suite, si désiré, il n'est pas nécessaire que, pris individuellement, ce voile de moyeu 12' se trouve par lui-même calé axialement sur le moyeu 10'.

Au contraire, il peut être axialement libre sur celui-ci.

Il suffit qu'il soit calé en rotation sur ce moyeu 10'.

Par exemple, il peut présenter, à sa périphérie interne, une denture 14' circonférentiellement complémentaire de celle, 14, du moyeu 10'.

Sa mise en place sur le moyeu 10' se trouve ainsi avantageusement simplifiée.

Mais, si désiré, et de manière complémentaire, il peut aussi bien être individuellement calé axialement sur le moyeu 10', comme représenté à titre d'exemple à la figure 11, voire encore faire corps avec celui-ci.

Dans la forme de réalisation représentée à la figure 11, si désiré, et tel que représenté, au lieu d'un centrage par le fond de la saignée 41 du moyeu, un centrage par la crête de la denture 14 de celui-ci peut être assuré, la portion de la couronne 39A, 39B de chacune des parties 38A, 38B constitutives du palier 37 suivant l'invention qui, présentant les échancrures 43A, 43B, est axialement en saillie par rapport à la partie courante d'une telle couronne 39A, 39B venant alors porter sur ladite crête.

Dans la forme de réalisation représentée, le centrage des rondelles 20, 20' et leur solidarisation en rotation avec le palier 37 se font alors dans un même plan transversal de l'ensemble.

Bien entendu, la présente invention ne se limite pas aux formes de réalisation décrites et représentées, mais englobe toute variante d'exécution.

En particulier, pour la solidarisation en rotation avec l'un des flasques présents, la couronne de chacune des parties constitutives du palier suivant l'invention peut présenter des saillies au lieu d'échancrures, des évidements complémentaires étant alors prévus à la périphérie interne de ce flasque.

En outre, le domaine d'application de l'invention n'est pas limité à celui des dispositifs amortisseurs de torsion plus particulièrement décrits et représentés, et a fortiori, à celui des frictions d'embrayage pour véhicules automobiles.

Il s'étend au contraire aussi bien à n'importe quel type de dispositif amortisseur de torsion comportant deux parties coaxiales montées rotatives l'une par rapport à l'autre.

**Revendications**

1. Dispositif amortisseur de torsion, notamment pour véhicule automobile, du genre comportant au moins deux parties coaxiales (A, C) montées rotatives l'une par rapport à l'autre, avec, radialement interposé entre celles-ci, un palier (37), caractérisé en ce que ledit palier (37) est formé de deux parties (38A, 38B) distinctes, qui sont disposées chacune respectivement de part et d'autre d'un plan diamétral de l'ensemble, et qui, calées chacune axialement sur l'une desdites parties coaxiales (A, C) , fournissent un appui axial à l'autre de celles-ci.

2. Dispositif amortisseur de torsion suivant la revendication 1, caractérisé en ce que les deux parties (38A, 38B) constitutives du palier (37) comportent chacune, d'une part, une languette (40A, 40B), qui s'étend radialement, dans un premier sens, et par laquelle elles sont chacune engagées dans une saignée (41) d'une desdites parties coaxiales (A, C) formée transversalement à cet effet dans celle-ci, et, d'autre part, une collerette (42A, 42B),qui s'étend également radialement, mais dans le sens opposé au précédent, et par laquelle elles fournissent à l'autre desdites parties coaxiales (A, C) l'appui axial recherché.

3. Dispositif amortisseur de torsion suivant la revendication 2, caractérisé en ce que ladite saignée (41) est commune aux deux parties (38A, 38B) constitutives du palier (37).

4. Dispositif amortisseur de torsion suivant l'une quelconque des revendications 2, 3, caractérisé en ce que, pour chacune des parties (38A, 38B) constitutives du palier (37), la languette (40A, 40B) ne s'étend circonférentiellement que sur une portion de la longueur d'une telle partie.

5. Dispositif amortisseur de torsion suivant l'une quelconque des revendications 2 et 3, caractérisé en ce que, pour chacune des parties (38A, 38B) constitutives du palier (37), la languette (40A, 40B) s'étend circonférentiellement sur toute la longueur d'une telle partie.

6. Dispositif amortisseur de torsion suivant l'une quelconque des revendications 2 à 5, caractérisé en ce que, pour chacune des parties (38A, 38B) constitutives du palier (37), la collerette (42A, 42B) s'étend dans un plan transversal différent de celui dans lequel s'étend sa languette (40A, 40B).

7. Dispositif amortisseur de torsion suivant l'une quelconque des revendications 1 à 6, caractérisé en ce que chacune des parties (38A, 38B) constitutives du palier (37) s'étend suivant un angle au centre sensiblement égal à 180°.

8. Dispositif amortisseur de torsion suivant l'une quelconque des revendications 1 à 7, dans lequel l'une des parties coaxiales (A, C) comporte un moyeu (10) tandis que l'autre comporte deux flasques ou rondelles (30, 30') qui, établis à distance l'un de l'autre transversalement par rapport au moyeu (10), autour dudit moyeu (10), sont solidaires en rotation l'un de l'autre, caractérisé en ce que les deux parties (38A, 38B) constitutives du palier (37) sont calées axialement sur le moyeu (10), et, établies axialement entre les deux flasques ou rondelles (30, 30') entourant celui-ci, elles assurent par elles-mêmes le maintien axial desdits flasques ou rondelles (30, 30') par rapport audit moyeu (10).

**Claims**

1. A torsion damper device, especially for an automobile vehicle, of the kind comprising at least two coaxial parts (A, C) mounted to rotate relative to one another with a bearing (37) radially interposed between them, characterized in that the said bearing (37) comprises two separate parts (38A, 38B) which are disposed one on each side of a diametral plane of the assembly and each of which, being locked axially to one of the said coaxial parts (A, C), provides axial bearing support for the other coaxial part.

2. A torsion damper device according to Claim 1, characterized in that the two constitutive parts (38A, 38B) of the bearing (37) each comprises, on the one hand, a tongue (40A, 40B) radially extending in a first direction, by which it is engaged in a groove (41) of one of the said coaxial parts (A, C), formed transversely in the part for this purpose, and, on the other hand, a collar (42A, 42B) which likewise extends radially, but in the opposite direction to the tongue, and which collar provides the desired axial bearing support for the other said coaxial part (A, C).

3. A torsion damper device according to Claim 2, characterized in that the said groove (4I) is common to both constitutive parts (38A, 38B) of the bearing (37).

4. A torsion damper device according to any one of Claims 2 or 3, characterized in that the tongue (40A, 40B) of each of the constitutive parts (38A, 38B) of the bearing (37) extends only over a portion of the circumferential length of the part.

5. A torsion damper device according to any one of Claims 2 or 3, characterized in that the tongue (40A, 40B) of each of the constitutive parts (38A, 38B) of the bearing (37) extends over the entire circumferential length of the part.

6. A torsion damper device according to any one of Claims 2 to 5, characterized in that the collar (42A, 42B) of each of the constitutive parts (38A, 38B) of the bearing (37) extends in a transverse plane different to that in which its tongue (40A, 40B) extends.

7. A torsion damper device according to any one of Claims 1 to 6, characterized in that each of the constitutive parts (38A, 38B) of the bearing (37) subtends an angle of substantially 180° at its centre.

8. A torsion damper device according to any one of Claims 1 to 7 in which one of the coaxial parts (A, C) comprises a hub (10) whereas the other comprises two flanges or washers (30, 30') around the said hub (10), disposed transversely relative to the hub (10), which are spaced from one another and are integral in rotation with one another, characterized in that the two constitutive parts (38A, 38B) of the bearing (37) are locked axially to the hub (10) and, being disposed axially between the two flanges or washers (30, 30') surrounding this, they themselves ensure the axial retention of the said flanges or washers (30, 30') relative to the said hub (10).

**Patentansprüche**

1. Drehschwingungsdämpfer, insbesondere für Kraftfahrzeuge, mit mindestens zwei koaxialen, gegeneinander verdrehbaren Teilen (A, C) und mit einem zwischen diesen eingesetzten Lager (37), dadurch gekennzeichnet, daß das Lager (37) aus zwei verschiedenen Teilen (38A, 38B) gebildet ist, die jeweils zu beiden Seiten einer diametralen Ebene der Anordnung angeordnet sind und von denen jedes axial auf eines der koaxialen Teile (A, C) festgelegt ist und einen axialen Anschlag für das andere dieser Teile bieten.

2. Vorrichtung nach Anspruch 1, dadurch gekennnzeichnet, daß die beiden das Lager (37) bildenden Teile (38A, 38B) jeweils zum einen eine Zunge (40A, 40B), die sich radial in einer ersten Richtung erstreckt und mittels welcher sie jeweils in einem Einschnitt (41) in einem der beiden koaxialen Teile (A, C), der zu diesem Zweck in Querrichtung in diesem ausgebildet ist, eingesetzt sind, und zum anderen einen Kragen (42A, 42B) aufweisen, der sich ebenfalls radialer Richtung, jedoch in zur ersten Richtung entgegengesetzt erstreckt und mittels welchem sie für das andere der koaxialen Teile (A, C) den gewünschten axialen Anschlag bereitstellen.

3. Vorrichtung nach Anspruch 2, dadurch gekennzeichnet, daß der Einschnitt (41) für beide das Lager (37) bildende Teile (38A, 38B) gemeinsam vorgesehen ist.

4. Vorrichtung nach einem der Ansprüche 2 oder 3, dadurch gekennzeichnet, daß für jedes der das Lager (37) bildenden Teile (38, 38B) die Zunge (40A, 40B) sich in Umfangsrichtung nur über einen Abschnitt der Länge eines solchen Teils erstreckt.

5. Vorrichtung nach einem der Ansprüche 2 und 3, dadurch gekennzeichnet, daß für jedes der das Lager (37) bildenden Teile (38A, 38B) die Zunge (40A, 40B) sich in Umfangsrichtung über die gesamte Länge dieses Teils erstreckt.

6. Vorrichtung nach mindestens einem der Ansprüche 2 bis 5, dadurch gekennzeichnet, daß sich an jedem der das Lager (37) bildenden Teile (38A, 38B) der Kragen (42A, 42B) in einer Querebene erstreckt, die verschieden ist von derjenigen, in der sich seine Zunge (40A, 40B) erstreckt.

7. Vorrichtung nach mindestens einem der Ansprüche 1 bis 6, dadurch gekennzeichnet, daß sich jedes der das Lager (37) bildenden Teile (38A, 38B) über einen Zentrumswinkel von dem wesentlichen gleich 180° erstreckt.

8. Vorrichtung nach mindestens einem der Ansprüche 1 bis 7, wobei das eine der koaxialen Teile (A, C) eine Habe (10) und das andere zwei Flansche oder Seitenscheiben (30, 30') aufweist, die bezüglich der Nabe (10) in Querrichtung in Abstand voneinander um die Nabe herum angeordnet und miteinander drehfest verbunden sind, dadurch gekennzeichnet, daß die beiden das Lager (37) bildenden Teile (38A, 38B) axial auf der Nabe (10) festgelegt sind, wobei sie axial zwischen den beiden Flanschen oder Seitenscheiben (30, 30) welche sie umgeben, angeordnet sind und sie selber die axiale Lagehaltung dieser Flansche oder Seitenscheiben (30, 30') bezüglich der Nabe (10) sicherstellen.

# FIG.1

FIG.2

FIG.3

FIG.4

FIG.5

FIG.6

FIG.7

FIG.9

FIG.8

FIG.10

FIG.11